**Europäisches Patentamt**

**European Patent Office**

**Office européen des brevets**

(11) Veröffentlichungsnummer: **0 230 534**

**A1**

# (12) EUROPÄISCHE PATENTANMELDUNG

(21) Anmeldenummer: 86115239.5

(22) Anmeldetag: 04.11.86

(51) Int. Cl.⁴: **C04B 41/81**

(30) Priorität: 21.12.85 DE 3545603

(43) Veröffentlichungstag der Anmeldung:
05.08.87 Patentblatt 87/32

(84) Benannte Vertragsstaaten:
BE DE ES FR GB IT NL

(71) Anmelder: **Degussa Aktiengesellschaft**
**Weissfrauenstrasse 9**
**D-6000 Frankfurt am Main 1(DE)**

(72) Erfinder: **Pfaff, P., Dr.**
**Buchenweg 4**
**D-6242 Kronberg(DE)**

(54) **Verfahren zur Herstellung von Dekoren mit diffusen Konturen auf keramischen Oberflächen.**

(57) Zur Herstellung von farbigen Dekoren mit diffusen Konturen auf keramischen Oberflächen mittels Siebdruck verwendet man Metallsalzlösungen, die

    a) als organische Lösungsmittel 1,2-Dihydroxyäthan, 1,2-Dihydroxypropan, 1,3-Dihydroxypropan, 1,2,3-Trihydroxypropan, deren Äther und Ester, und/oder Diazetonalkohol und

    b) als Verdickungsmittel feindisperse anorganische Stoffe und/oder in diesen Lösungsmitteln lösliche hochmolekulare, organische Kunststoffe enthalten.

EP 0 230 534 A1

## Verfahren zur Herstellung von Dekoren mit diffusen Konturen auf keramischen Oberflächen

Die Erfindung betrifft ein Verfahren zur Herstellung von farbigen Dekoren mit diffusen Konturen auf keramischen Oberflächen durch mechanisches Auftragen von viskosen wässrigen Metallsalzlösungen, die organische Lösungsmittel und Verdickungsmittel enthalten.

Dekore auf keramischen Oberflächen werden normalerweise dadurch erzeugt, daß man mit Siebdrucköl oder Spezialölen angepastete keramische Farben auf den keramischen Scherben oder die Glasur druckt oder als Abziehbild oder im Umdruck auf diese überträgt. Die Eigenheit dieser Druckverfahren ist ein kantenscharfer Druck; die gedruckte keramische Farbe behält auch nach dem Brand die Druckkonturen bei. Nur wenn die keramische Farbe mit der Glasur reagiert, sogenannte Reaktivfarben, werden die Konturen des Druckes verändert.

Nach W. Lehnhäuser, Glasuren und ihre Farben Wilhelm-Knapp-Verlag, Düsseldorf, 3. Auflage 1973, Seite 163-165, ist es bekannt, mit viskosen wässrigen Metallsalzlösungen, die organische Lösungsmittel und Verdickungsmittel enthalten können, farbige Dekore und Glasuren herzustellen. Dazu werden Metallsalze mit Wasser, Alkohol, Glycerin, Sirup und/oder Tylose (Celluloseäther) versetzt und mit einem Pinsel auf die keramische Oberfläche aufgetragen. Nach dem Brennen erhält man diffuse Konturen. Dieses Verfahren wird allerdings fast ausschließlich im kunstgewerblichen Bereich angewendet, da man diese Lösungen nicht maschinell verdrucken kann. Außerdem sind die Lösungen nicht stabil, da die viskositätserhöhenden Zusätze Sirup und Celluloseäther mit den farbgebenden Schwermetallen über längere Zeiträume reagieren und zu Ausflockungen führen.

Es war daher Aufgabe der vorliegenden Erfindung, ein Verfahren zur Herstellung von farbigen Dekoren mit diffusen Konturen auf keramischen Oberflächen durch mechanisches Auftragen von viskosen wässrigen Metallsalzlösungen, die organische Lösungsmittel und Verdickungsmittel enthalten, zu entwickeln, das maschinell im Siebdruck oder Umdruckverfahren durchgeführt werden kann und bei dem die Metallsalzlösungen über längere Zeiträume stabil bleiben.

Diese Aufgabe wurde erfindungsgemäß dadurch gelöst, daß man Metallsalzlösungen verwendet, die

a) als organische Lösungsmittel 1,2-Dihydroxyäthan, 1,2-Dihydroxypropan, 1,3-Dihydroxypropan, 1,2,3-Trihydroxypropan, deren Äther und Ester, und/oder Diazetonalkohol und

b) als Verdickungsmittel feindisperse anorganische Stoffe und/oder in diesen Lösungsmitteln lösliche hochmolekulare organische Kunststoffe enthalten.

Vorzugsweise verwendet man als feindisperse anorganische Stoffe Bentonite, pyrogene und/oder gefällte Kieselsäuren mit Teilchengrößen ≤ 10 μm und als hochmolekulare organische Kunststoffe Polyoxyäthylen, Hydroxyäthylcellulose, Polyvinylmethyläther, Polyvinylalkohol und/oder Polyvinylpyrrolidon.

Außerdem ist es für manche Anwendungszwecke vorteilhaft, wenn die Metallsalzlösungen noch pulverförmige keramische Farben enthalten.

Diese Metallsalzlösungen werden von den porösen keramischen Oberflächen aufgesaugt und können durch Kapillareffekte und Diffusion relativ große Strecken zurücklegen, so daß man nach dem Brand diffuse, verschwommene Konturen erhält, ohne daß das Dekor, wie bei Reaktivfarben, reliefartig wird und an chemischer Beständigkeit verliert.

Die bei dem erfindungsgemäßen Verfahren verwendeten Metallsalzlösungen sind sehr stabil und zeigen auch über lange Zeiträume keinerlei Ausflockungen.

Beim Brennen zerfällt das Metallsalz und bildet ein Oxid, das mit den keramischen Scherben und der Glasur unter Ausbildung einer Färbung reagiert.

Als Metallsalze werden Salze von Metallionen verwendet, die Gläser färben, wie Kobalt, Kupfer, Nickel, Mangan, Eisen, Chrom, Silber, Gold und Platinmetalle. Daneben aber auch Salze solcher Stoffe, die die Färbung einer Glasur oder eines Scherbens ändern.

In der baukeramischen Industrie müssen Siebdruckfarben stundenlang mit reproduzierbarem Ergebnis verdruckbar sein und dürfen auch bei längeren Pausen nicht im Sieb eintrocknen. Obige Metallsalzlösungen trocknen nicht ein und sind daher für den Siebdruck sehr gut geeignet. Die verwendeten Lösungsmittel besitzen alle eine Verdunstungszahl, die größer als 10 ist.

Zum Druck auf den saugfähigen keramischen Scherben müssen die Druckfarben außerdem wasserverträglich sein, damit die wässrige Glasursuspension den Druck einwandfrei benetzt und nicht abperlt. Aber auch zum Druck auf die ungebrannte Glasur werden wasserverträgliche Pasten bevorzugt, da dann keine besonderen Arbeitsschutz-und Brandschutzmaßnahmen erforderlich sind. Auch diese Forderung wird von den obigen Metallsalzlösungen erfüllt.

Bei den Polyolen 1,2-Dihydroxyäthan, 1,2-und 1,3-Dihydroxypropan, 1,2,3-Trihydroxypropan, Diazetonalkohol und den daraus hergestellten Äthern und Estern handelt es sich um wasserlösliche organische Lösungsmittel, die mit den färbenden Metallsalzen verträglich sind.

Durch den Zusatz von feindispersem Bentonit oder feindispersen Kieselsäuren läßt sich das Fließverhalten der Metallsalzlösungen verbessern. Zur Erzielung der gewünschten Verlaufeigenschaften benötigt man hochviskose, fliessfähige Druckpasten, die man durch das Auflösen hochmolekularer Stoffe erhält, die aber die gelösten Metallsalze nicht wieder ausfällen dürfen. Nur Stoffe, wie Hydroxybzw. Propoxycellulose, Polyvinylmethyläther, Polypyrrolidon, Polyvinylalkohol und Polyglykole sind mit den verwendeten organischen Lösungsmitteln und den hohen Metallsalzkonzentrationen gleichzeitig verträglich.

Die Metallsalzlösungen enthalten vorzugsweise 10 bis 40 % Metallsalz, 30 bis 80 % organisches Lösungsmittel und 1 bis 20 % Verdickungsmittel.

Fügt man der Metallsalzlösung noch keramische Farben in kontrastierenden Farbtönen bei, z.B. eine Unterglasurfarbe aus Zirkon-Praseodym-Gelb zu einer Kupfersalzlösung, so erhält man in einem Druck ein zweifarbiges Dekor. Die gelbe Unterglasurfarbe bleibt als Liniendekor ortsfest, die Kupfersalzlösung tritt seitlich aus. Man erhält einen gelblich grünen Strickdekor, dessen Konturen mit einem bis 5 mm breiten, blaugrünen Saum umgeben sind.

Folgende Beispiele sollen das erfindungsgemäße Verfahren näher erläutern:

1. Eine Lösung der Zusammensetzung:
Kupfer(II)-chloridhydrat
$CuCl_2 . 6 H_2O$     35,0 Gew.-Teile
1,2-Dihydroxyäthan     30,0 Gew.-Teile
Polyoxäthylen (M = 35.000)     15,0 Gew.-Teile
Wasser     12,0 Gew.-Teile
Polyoxäthylen-Sorbitan-Äther   5,0 Gew.-Teile
nichtionisches Tensid     3,0 Gew.-Teile
wird mit einem Siebdruckgewebe (30 Faden/cm) auf einen keramischen Scherben gedruckt, mit einer bleihaltigen Transparentglasur glasiert und bei 1050° C gebrannt. Man erhält ein diffuses, blaugrünes Dekor.

2. Eine Lösung aus
Manganchlorid $MnCl_2 . 6 H_2O$   25 Gew.-Teile
1,2,3-Trihydroxypropan     50 Gew.-Teile
Hydroxyäthylcellulose     4 Gew.-Teile
Wasser     21 Gew.-Teile
wird wie in Beispiel 1 verarbeitet. Man erhält ein diffuses, braunes Dekor.

Die Metallsalzlösungen werden je nach Anwendungszweck auf Viskositäten zwischen 50 mPa.s bis 1000 Pa.s eingestellt.

**Ansprüche**

1. Verfahren zur Herstellung von farbigen Dekoren mit diffusen Konturen auf keramischen Oberflächen durch mechanisches Auftragen von viskosen wässrigen Metallsalzlösungen, die organische Lösungsmittel und Verdickungsmittel enthalten, dadurch gekennzeichnet, daß man Metallsalzlösungen verwendet, die

    a) als organische Lösungsmittel 1,2-Dihydroxyäthan, 1,2-Dihydroxypropan, 1,3-Dihydroxypropan, 1,2,3-Trihydroxypropan, deren Äther und Ester, und/oder Diazetonalkohol und

    b) als Verdickungsmittel feindisperse anorganische Stoffe und/oder in diesen Lösungsmitteln lösliche hochmolekulare, organische Kunststoffe enthalten.

2. Verfahren nach Anspruch 1, dadurch gekennzeichnet, daß als feindisperse anorganische Stoffe Bentonite, pyrogene und/oder gefällte Kieselsäuren mit Teilchengrößen ≤ 10 $\mu$m und als hochmolekulare organische Kunststoffe Polyoxyäthylen, Hydroxyäthylcellulose, Polyvinylmethyläther, Polyvinylalkohol und/oder Polyvinylpyrrolidon eingesetzt werden.

3. Verfahren nach Anspruch 1 und 2, dadurch gekennzeichnet, daß die Metallsalzlösungen zusätzlich pulverförmige keramische Farben enthalten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A- 500 001 (DEGUSSA) <br> * Seite 1, Zeilen 31-62 * <br><br> --- | 1-3 | C 04 B 41/81 |
| Y | DE-C- 472 583 (SFINX) <br> * Seite 1, Zeilen 12-23 * <br><br> --- | 1-3 | |
| A | DE-C- 498 588 <br> (CANOVA-MARMOR-WERKSTÄTTEN) <br> * Seite 1, Zeilen 1-24 * <br><br> --- | 1 | |
| A | GB-A- 929 417 (FERRO CORP.) <br><br> * Seite 1, Zeilen 49-62 * <br><br> ----- | | |

**RECHERCHIERTE SACHGEBIETE (Int. Cl.4)**

C 04 B 41/00
B 44 C 1/00
B 05 D 5/00

Der vorliegende Recherchenbericht wurde für alle Patentansprüche erstellt.

| Recherchenort | Abschlußdatum der Recherche | Prüfer |
|---|---|---|
| DEN HAAG | 07-04-1987 | DAELEMAN P.C.A. |